# EUROPÄISCHE PATENTSCHRIFT

(11) **EP 1 991 734 B1**
(45) Veröffentlichungstag und Bekanntmachung des Hinweises auf die Patenterteilung: **04.01.2012**
(21) Anmeldenummer: 07722847.6
(22) Anmeldetag: 19.02.2007
(51) Int. Cl.: D06N 7/00

(54) **BAUBEREICHSBAHN**
CONSTRUCTION SECTOR MEMBRANE
VOIE D'ASSEMBLAGE

(30) Priorität: 06.03.2006 DE 102006010598; 19.07.2006 DE 102006033803
(43) Veröffentlichungstag der Anmeldung: 19.11.2008
(73) Patentinhaber: EWALD DÖRKEN AG, 58313 Herdecke (DE)
(72) Erfinder: SCHRÖER, Jörn, 58313 Herdecke (DE); RAIDT, Heinz, Peter, 44227 Dortmund (DE)
(74) Vertreter: Weidener, Jörg Michael
(86) Internationale Anmeldenummer: PCT/EP2007/001410
(87) Internationale Veröffentlichungsnummer: WO 2007/101534

(56) Entgegenhaltungen:
- EP-A1- 0 005 814
- EP-A2- 0 325 028
- DE-U1- 29 622 129
- FR-A1- 2 800 445

## Beschreibung

Die Erfindung betrifft eine Baubereichsbahn mit wenigstens einer äußeren Vliesschicht ausgebildet zur Herstellung einer Verbindung mit einer Auftragsmasse wie Mörtel, Beton oder einem Kleber.

Baubereichsbahnen der eingangs genannten Art sind bereits aus der EP-A2-0 325 028 und der EP-A1-0 005 814 bekannt. Im Zusammenhang mit den bekannten Bahnen ist allerdings festgestellt worden, dass die Verbindung mit Mörtel oder Beton zum Teil nur unzureichend ist, so dass sich eine zu geringe Haftzugfestigkeit ergibt und sich die betreffenden Bahnen leicht ablösen können.

Aufgabe der vorliegenden Erfindung ist es, eine Bahn der eingangs genannten Art zu Verfügung zu stellen, die sich sicher mit dem jeweiligen Untergrund verbinden lässt und bei der ein unbeabsichtigtes Ablösen nicht befürchtet werden muss.

Erfindungsgemäß ist nun bei der eingangs genannten Bahn zur Verwendung im Baubereich mit äußerer Vliesschicht vorgesehen, daß die Vliesschicht nur über einen Teil ihrer Schichtdicke und/oder nur über einen Teil ihrer Fläche hydrophil ausgebildet ist. Überraschenderweise hat sich herausgestellt, daß die Verankerung von Mörtel, Beton aber auch Kleber, insbesondere hydraulische Bindemittel enthaltende Kleber oder Dispersionskleber, deutlich gesteigert ist, wenn die Vliesschicht nur bereichsweise hydrophiliert ist. Die Hydrophilierung führt offensichtlich deshalb zu einer erheblich verbesserten Verankerung der Fasern der Vliesschicht, da beispielsweise bei Verwendung von Mörtel und Beton das Anmachwasser zusammen mit dem hydraulischen Bindemittel sehr weit in die Vliesschicht penetriert bzw. eindringt, so daß die Vliesfasern eine deutlich gesteigerte Einbindung in den Mörtel oder Beton erhalten. Je nach Art und Umfang der Hydrophilierung konnte eine zum Teil erheblich gesteigerte Haftzugfestigkeit mit Beton, Mörteln und Klebern gegenüber nicht hydrophilierten Vliesschichten festgestellt werden. So wurden Steigerungen der Haftzugfestigkeit von mehr als 20%, z.T. von mehr als 50% festgestellt. Ein weiterer Vorteil der vorliegenden Erfindung ergibt sich im übrigen dadurch, daß zur Erzielung einer hinreichenden Haftzugfestigkeit nur eine vergleichsweise geringe Menge an Beton, Mörtel oder Kleber erforderlich ist. Letztlich muß die Bahn nicht sonderlich weit in ein Mörtelbett eingedrückt bzw. der Mörtel auf die Vliesschicht aufgedrückt werden, damit sich eine hinreichende Eindringung ergibt. Die Erfindung ermöglicht es letztlich damit, Beton, Mörtel oder Kleber einzusparen.

Im übrigen ist im Zusammenhang mit der Erfindung festgestellt worden, daß gerade die Verwendung von synthetischen Fasern, insbesondere Polyolefinen und insbesondere von Polypropylenfasern als Fasermaterial des Vlieses und deren Hydrophilierung zu einem besonders guten Ergebnis führt. Zwar sind auch grundsätzlich andere Werkstoffe, aus denen ein sogenanntes Haftbrü kenvlies hergestellt werden könnte, denkbar. Diese scheiden jedoch immer dann aus, wenn große Mengen der Vliesschicht benötigt werden und die diesbezüglichen Fasermaterialien sehr teuer sind. Gerade durch die Verwendung von Polyolefinen und insbesondere Polypropylen lassen sich sehr günstige Bahnen herstellen, die darüber hinaus auch nach Hydrophilierung in Kontakt beispielsweise mit Wasser stabil sind und nicht zur Hydrolyse neigen.

Weiterhin ist festgestellt worden, daß es zur Erzielung einer hinreichenden Haftzugfestigkeit ausreichend ist, die Vliesschicht nur über einen Teil ihrer Schichtdicke hydrophil auszubilden. Zweckmäßigerweise sollte dabei der äußere, oberflächennahe Bereich der Vliesschicht hydrophil ausgebildet sein, während der oberflächenferne Bereich der Vliesschicht nicht-hydrophil ausgebildet ist. Es ist festgestellt worden, daß es zur Erzielung einer guten Haftzugfestigkeit ausreichend ist, wenn zwischen 20 und 80%, vorzugsweise zwischen 40 und 60% der Schichtdicke hydrophiliert ist.

Die nur zum Teil vorzunehmende Hydrophilierung über die Schichtdicke ausgehend vom äußeren, oberflächennahen Bereich der Vliesschicht hat zur Folge, daß die Herstellungskosten der erfindungsgemäßen Bahn gegenüber einer nicht-hydrophil ausgebildeten Vliesschicht nur geringfügig erhöht sind, da nicht die gesamte Vliesschicht hydrophiliert ist.

Alternativ oder aber auch ergänzend zu der über die Schichtdicke bereichsweisen Hydrophilierung ist es, wenn die Vliesschicht nur über einen Teil ihrer Fläche hydrophil ausgebildet ist. Dies läßt sich beispielsweise dadurch erzeugen, daß nur ein Teil der Fasern der Vliesschicht hydrophil ausgebildet ist, während ein anderer Teil nicht hydrophiliert ist. Dabei ist es auch möglich, die Fasern als solche nur teilweise zu hydrophilieren. Außerdem ist es möglich, daß bestimmte flächige Bereiche hydrophil ausgebildet sind, während andere Bereiche dies nicht sind. Auch in diesem Zusammenhang ist festgestellt worden, daß eine Hydrophilierung zwischen 20 und 80% der Gesamtfläche der Bahn, vorzugsweise zwischen 40 und 60% hinreichend ist, um gute Haftzugfestigkeitswerte zu erreichen.

Weiterhin ist festgestellt worden, daß sich eine gesteigerte Haftzugfestigkeit unabhängig davon ergibt, wie die Hydrophilierung der einzelnen Fasern der Vliesschicht vorgenommen worden ist. Zum einen ist es möglich, daß die Fasern der Vliesschicht bei der Faserherstellung durch Zugabe wenigstens eines Hydrophilierungsadditives hydrophiliert sind. Auch ist es möglich, daß die Fasern der Vliesschicht oder die Vliesschicht selbst während oder nach der Herstellung durch äußere Applizierung mit wenigstens einem Hydrophilierungsmittel hydrophiliert sind. Beispielsweise ist eine äußere Applizierung von Avivage oder auch Seifenlösung möglich. Letztlich ist die Hydrophilierung der Fasern der Vliesschicht oder aber auch der Vliesschicht insgesamt durch jede chemische und/oder physikalische Behandlung möglich. Auch Vorbehandlungen der Vliesschicht oder der Fasern sind beispielsweise durch eine Korona- oder Plasmavorbehandlung möglich.

Je nach Anwendungsbereich kann die erfindungsgemäße Bahn wenigstens eine weitere Schicht aufweisen. Die Bahn kann zwei- oder auch mehrschichtig sein und eine oder auch zwei erfindungsgemäß hydrophil ausgebildete Vliesschichten aufweisen. So sind beispielsweise Ausführungsformen möglich, bei denen die Bahn jeweils zwei äußere bzw. außenliegende hydrophil ausgebildete Vliesschichten aufweist, zwischen denen wenigstens eine weitere Bahn angeordnet ist, die eine bestimmte Funktion, wie beispielsweise eine Dichtungs- oder Entkopplungsfunktion aufweist.

Es ist festgestellt worden, daß sich die erfindungsgemäße Bahn bevorzugt als Dichtungsbahn, Entkopplungsbahn oder als Drainagebahn eignet. Ein weiteres Anwendungsgebiet der erfindungsgemäßen Bahn besteht in der Verwendung als Anschlußstreifen oder Fugenband zwischen getrennten Bereichen, die eingeputzt werden sollen, wie beispielsweise der Übergang von Wand zur Decke. Solche Bänder oder Streifen können gleichzeitig die Funktion der Abdichtung, der körperlichen Trennung und dem Bewegungsausgleich dienen.

Eine weitere Anwendung besteht darin, die Bahn als Tapete oder Flächenheizung auszubilden.

Nachfolgend wird sowohl der Stand der Technik als auch die Erfindung anhand der Zeichnung beschrieben. Dabei zeigt
- Fig. 1: eine schematische Querschnittsansicht einer bekannten Bahn, auf die ein Klebemörtel aufgebracht ist,
- Fig. 2: eine schematische Querschnittsansicht der Bahn aus Fig. 1, auf die eine Fliese aufgebracht ist,
- Fig. 3: eine schematische Querschnittsansicht einer erfindungsgemäßen Bahn, auf die Klebemörtel und eine Fliese aufgebracht sind und
- Fig. 4: eine schematische Querschnittsansicht einer Vliesschicht einer erfindungsgemäßen Bahn.

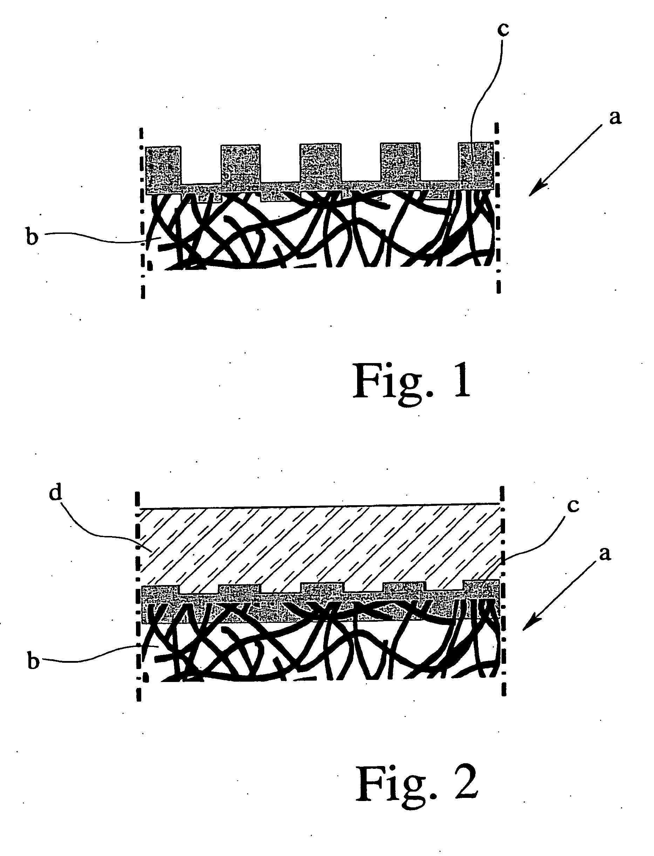

In Fig. 1 ist ein Teil einer bekannten Bahn a dargestellt. Die Bahn a weist eine Vliesschicht b auf, auf deren äußere Oberfläche mit einem nicht dargestellten Zahnspachtel ein Klebemörtel c aufgezogen ist. Der Klebemörtel c ist unter dem Druck der Spachtelzähne in die obere Zone der Vliesschicht b eingedrungen.

Wird später die Fliese d in das Mörtelbett gedrückt, so wird sich der Klebemörtel im Idealfall gleichmäßig unter der Fliese d verteilen, und wird gleichzeitig ganzflächig in die obere Zone Vlieses b eingedrückt. Die Verankerung erfolgt dabei mechanisch dadurch, daß die Fasern der Vliesschicht b im Klebemörtel c liegen, der aushärtet. Dieser Zustand in Bild 2 dargestellt, wobei die Fliese d sich auf der Schicht mit dem Klebemörtel c befindet. Erkennbar ist der Klebemörtel c lediglich in den Oberflächenbereich der Vliesschicht b eingedrungen.

In Bild 3 ist nun die erfindungsgemäße Ausgestaltung dargestellt. Gezeigt ist eine Bahn 1, die zur Verwendung im Baubereich vorgesehen ist, wobei es sich bei der Bahn 1 grundsätzlich um eine Unterlagsbahn handeln kann, auf die außen noch etwas aufgetragen wird oder aber auch um eine Tapete oder Flächenheizung, die an den Untergrund angeklebt wird. Die Bahn 1 weist eine äußere Vliesschicht 2 aus synthetischen Fasern, nämlich Polyolefinen auf. Vorliegend besteht die Vliesschicht 2 aus Polypropylen, da dieses kostengünstig und gerade für den vorgesehenen Anwendungsbereich stabil ist. Die Vliesschicht 2 setzt sich aus einer Vielzahl von Fasern 3 zusammen. Auf die Außenseite 4 der Vliesschicht 2 ist ein Klebemörtel 5 in einer Schicht aufgebracht, auf den wiederum eine Fliese 6 aufgebracht ist.

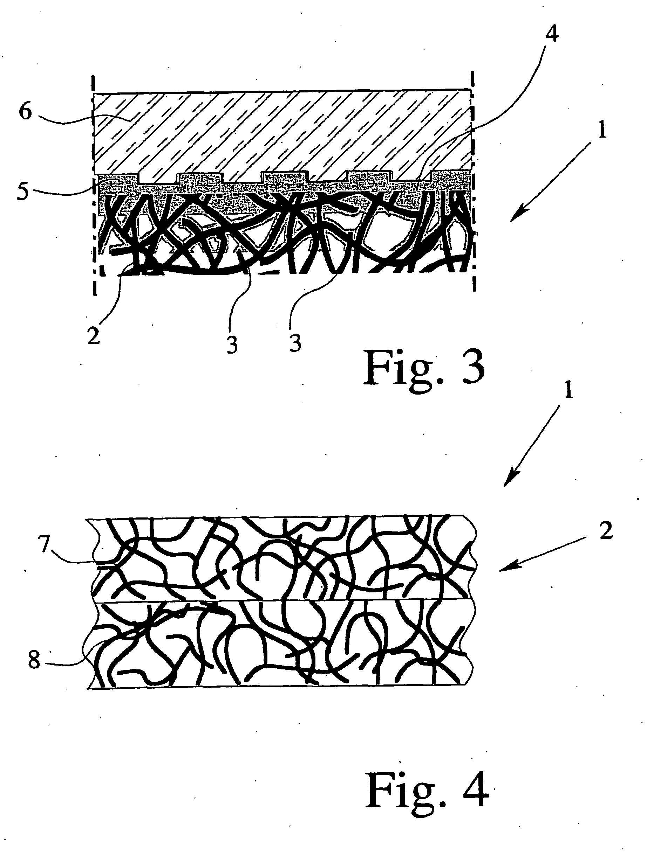

Im Gegensatz zu der zu den Fig. 1 und 2 beschriebenen Ausführungsform ist bei der Ausführungsform gemäß Fig. 3 vorgesehen, daß die Vliesschicht 2 nur bereichsweise hydrophil ausgebildet ist. Durch die Hydrophilierung zumindest des äußeren Bereich der Vliesschicht 2 dringt ein Teil des Klebemörtels 5 tiefer in die Vliesschicht 2 ein. Die Hydrophilierung bewirkt, daß Anmachwasser des Klebemörtels 5 mit Klebemörtelpartikeln gegenüber der in Fig. 2 dargestellten Ausführungsform, die den Stand der Technik zeigt, deutlich tiefer in die Vliesschicht 2 penetriert, so daß sich eine erheblich gesteigerte Einbindung der Fasern 3 ergibt. In der dargestellten Ausführungsform ist die Eindringtiefe des Klebemörtels 5 gegenüber den Verhältnissen beim Stand der Technik gemäß Fig. 2 um mehr als 100% erhöht. Daraus ergibt im Ergebnis eine erheblich gesteigerte Haftzugfestigkeit gegenüber dem Haftbrückenvlies aus Fig. 2.

In Fig. 4 ist eine Ausführungsform dargestellt, bei der Vliesschicht 2 auf die Schichtdicke bezogen zwei Schichtbereiche 7, 8 aufweist. Dabei ist der äußere Schichtbereich 7 hydrophiliert, während der andere Schichtbereich 8 nicht hydrophil ausgebildet ist. Letztlich setzt sich die in Fig. 4 dargestellte Bahn 1 aus zwei einzelnen Vliesschichten zusammen, die miteinander verbunden sind. Nicht dargestellt ist, daß die Bahn dadurch nur teilweise hydrophiliert ist, daß nur ein bestimmter Anteil der Fasern 3 hydrophiliert ist, während der andere Teil nicht hydrophil ausgebildet ist.

### Bezugszeichenliste

- a: Bahn
- b: Vliesschicht
- c: Klebemörtel
- d: Fliese

- 1: Bahn
- 2: Vliesschicht
- 3: Fasern
- 4: Außenseite
- 5: Klebemörtel
- 6: Fliese
- 7: Schichtbereich
- 8: Schichtbereich

## Patentansprüche

1. Baubereichsbahn (1) mit wenigstens einer äußeren Vliesschicht (2) ausgebildet zur Herstellung einer Verbindung mit einer Auftragsmasse wie Mörtel, Beton oder einem Kleber, **dadurch gekennzeichnet, daß** die Vliesschicht (2) nur über einen Teil ihrer Schichtdicke und/oder nur über einen Teil ihrer Fläche hydrophil ausgebildet ist.

2. Baubereichsbahn nach Anspruch 1, **dadurch gekennzeichnet, daß** die Vliesschicht (2) synthetische Fasern, insbesondere aus Polyolefinen, vorzugsweise aus Polypropylen aufweist.

3. Baubereichsbahn nach Anspruch 1 oder 2, **dadurch gekennzeichnet, daß** lediglich der äußere, oberflächennahe Bereich der Vliesschicht (2) hydrophil ausgebildet ist.

4. Baubereichsbahn nach einem der vorhergehenden Ansprüche, **dadurch gekennzeichnet, daß** 20 bis 80% der Schichtdicke, vorzugsweise 40 bis 60% der Schichtdicke hydrophil ausgebildet ist.

5. Baubereichsbahn nach einem der vorhergehenden Ansprüche, **dadurch gekennzeichnet, daß** nur ein der Teil der Fasern (3) der Vliesschicht (2) hydrophil ausgebildet ist.

6. Baubereichsbahn nach einem der vorhergehenden Ansprüche, **dadurch gekennzeichnet, daß** zwischen 20 und 80%, vorzugsweise zwischen 40 und 60% der Fläche der Vliesschicht hydrophil ausgebildet ist.

7. Baubereichsbahn nach einem der vorhergehenden Ansprüche, **dadurch gekennzeichnet, daß** Fasern (3) der Vliesschicht (2) bei der Faserherstellung durch Zugabe wenigstens eines Hydrophilierungsadditves hydrophiliert sind.

8. Baubereichsbahn nach einem der vorhergehenden Ansprüche, **dadurch gekennzeichnet, daß** Fasern (3) der Vliesschicht (2) oder die Vliesschicht (2) während oder nach der Herstellung durch äußere Applizierung mit wenigstens einem Hydrophilierungsmittel hydrophiliert sind.

9. Baubereichsbahn nach einem der vorhergehenden Ansprüche, **dadurch gekennzeichnet, daß** die Bahn (1) wenigstens eine weitere Schicht aufweist.

10. Verwendung einer Baubereichsbahn nach einem der vorhergehenden Ansprüche als Abdichtungsbahn, als Entkopplungsbahn, als Drainagebahn oder als Anschlußstreifen oder Fugenband

11. Verwendung einer Baubereichsbahn nach einem der vorhergehenden Ansprüche 1 bis 9 als Tapete oder als Flächenheizung.

## Claims

1. A construction sector membrane (1) with at least one outer fibrous nonwoven web layer (2) constructed to produce a bond with an applied material such as mortar, concrete or an adhesive, **characterized in that** the outer fibrous nonwoven web layer (2) is only hydrophilic over part of its layer thickness and/or over part of its surface.

2. The construction sector membrane according to claim 1, **characterized in that** the outer fibrous nonwoven web layer (2) comprises synthetic fibers, in particular of polyolefins, preferably of polypropylene.

3. The construction sector membrane according to claim 1 or 2, **characterized in that** merely the outer, near-surface region of the outer fibrous nonwoven web layer (2) is hydrophilic.

4. The construction sector membrane according to any one of the preceding claims, **characterized in that** 20 to 80% of the layer thickness, preferably 40 to 60% of the layer thickness is hydrophilic.

5. The construction sector membrane according to any one of the preceding claims, **characterized in that** only some fibers (3) of the fibrous nonwoven web layer (2) are hydrophilic.

6. The construction sector membrane according to any one of the preceding claims, **characterized in that** between 20 and 80%, preferably between 40 and 60% of the surface of the fibrous nonwoven web layer (2) are hydrophilic.

7. The construction sector membrane according to any one of the preceding claims, **characterized in that** fibers (3) of the fibrous nonwoven web layer (2) are hydrophilicized in the course of fiber production by addition of at least one hydrophilicizing additive.

8. The construction sector membrane according to any one of the preceding claims, **characterized in that** fibers (3) of the fibrous nonwoven web layer (2) or the fibrous nonwoven web layer (2) are/is hydrophilicized during or after production by outer application of at least one hydrophilicizing agent.

9. The construction sector membrane according to any one of the preceding claims, **characterized in that** the membrane (1) comprises at least one further layer.

10. Use of a construction sector membrane according to any one of the preceding claims as a sealing membrane, as a decoupling membrane, as a drainage membrane or as a flashing or waterstop tape.

11. Use of a construction sector membrane according to any one of the preceding claims 1 to 9 as wall covering or as panel heating.

## Revendications

1. Nappe textile pour le bâtiment (1), avec au moins une couche de non-tissé extérieure (2), configurée pour réaliser une liaison avec une masse de coulée telle du mortier, du béton ou d'une colle, **caractérisée en ce que** la couche de non-tissé (2) est rendue hydrophile seulement sur une partie de son épaisseur de couche et/ou seulement sur une partie de sa surface.

2. Nappe textile pour le bâtiment selon la revendication 1, **caractérisée en ce que** la couche de non-tissé (2) comporte des fibres synthétiques, en particulier en polyoléfines, de préférence en polypropylène.

3. Nappe textile pour le bâtiment selon la revendication 1 ou 2, **caractérisée en ce que** seule la partie extérieure de la couche de non-tissé (2), proche de la surface, est rendue hydrophile.

4. Nappe textile pour le bâtiment selon l'une quelconque des revendications précédentes, **caractérisée en ce que** 20 à 80 % de l'épaisseur de couche, de préférence 40 à 60 % de l'épaisseur de couche, est rendue hydrophile.

5. Nappe textile pour le bâtiment selon l'une quelconque des revendications précédentes, **caractérisée en ce que** seule une partie des fibres (3) de la couche de non-tissé (2) est rendue hydrophile.

6. Nappe textile pour le bâtiment selon l'une quelconque des revendications précédentes, **caractérisée en ce qu'**entre 20 et 80 %, de préférence entre 40 et 60 % de la surface de la couche de non-tissé est rendue hydrophile.

7. Nappe textile pour le bâtiment selon l'une quelconque des revendications précédentes, **caractérisée en ce que** les fibres (3) de la couche de non-tissé (2) sont rendues hydrophile lors de la fabrication des fibres par l'addition d'au moins un agent hydrophile.

8. Nappe textile pour le bâtiment selon l'une quelconque des revendications précédentes, **caractérisée en ce que** les fibres (3) de la couche de non-tissé (2) ou la couche de non-tissé (2) sont rendues hydrophiles pendant ou après la fabrication par l'application externe d'au moins un agent hydrophile.

9. Nappe textile pour le bâtiment selon l'une quelconque des revendications précédentes, **caractérisée en ce que** la nappe (1) comporte au moins une autre couche.

10. Utilisation d'une nappe textile pour le bâtiment selon l'une quelconque des revendications précédentes comme nappe d'étanchéification, comme nappe de découplage, comme nappe de drainage ou comme bande de raccordement ou de joint.

11. Utilisation d'une nappe textile pour le bâtiment selon l'une quelconque des revendications précédentes 1 à 9 comme revêtement mural ou comme chauffage de surface.
